# EUROPÄISCHE PATENTSCHRIFT

(11) **EP 3 105 433 B1**
(45) Veröffentlichungstag und Bekanntmachung des Hinweises auf die Patenterteilung: **06.12.2017**
(21) Anmeldenummer: 15708438.5
(22) Anmeldetag: 13.02.2015
(51) Int. Cl.: F02B 75/04, F16F 15/26, F16F 15/28

(54) **MEHRGELENKSKURBELTRIEB EINER BRENNKRAFTMASCHINE SOWIE ENTSPRECHENDE BRENNKRAFTMASCHINE**
MULTIPLE JOINT CRANK MECHANISM OF AN INTERNAL COMBUSTION ENGINE, AND CORRESPONDING INTERNAL COMBUSTION ENGINE
MÉCANISME À MANIVELLE MULTIARTICULÉ D'UN MOTEUR À COMBUSTION INTERNE AINSI QUE MOTEUR À COMBUSTION INTERNE CORRESPONDANT

(30) Priorität: 14.02.2014 DE 102014002022
(43) Veröffentlichungstag der Anmeldung: 21.12.2016
(73) Patentinhaber: Audi AG, 85045 Ingolstadt (DE)
(72) Erfinder: BRENDEL, Matthias, 85049 Ingolstadt (DE); MEYER, Markus, 09456 Mildenau (DE)
(86) Internationale Anmeldenummer: PCT/EP2015/000317
(87) Internationale Veröffentlichungsnummer: WO 2015/120987

(56) Entgegenhaltungen:
- EP-A2- 1 180 588
- EP-A2- 1 215 380
- EP-A2- 1 760 289
- DE-A1-102005 054 761
- JP-A- 2004 124 775

## Beschreibung

Die Erfindung betrifft einen Mehrgelenkskurbeltrieb einer Brennkraftmaschine, mit wenigstens einem um eine Koppelglieddrehachse drehbar auf einen Hubzapfen einer Kurbelwelle gelagerten Koppelglied und wenigstens einer um eine Exzenterdrehachse drehbar auf einem Hubzapfen einer Exzenterwelle gelagerten Anlenkpleuelstange, wobei das Koppelglied um eine Kolbenpleueldrehachse schwenkbar mit einer Kolbenpleuelstange eines Kolbens der Brennkraftmaschine und um eine Anlenkpleueldrehachse schwenkbar mit der Anlenkpleuelstange verbunden ist, wobei das Koppelglied ein den Hubzapfen der Kurbelwelle aufnehmendes Lagerauge aufweist, und wobei ein Koppelwinkel zwischen einer gedachten Geraden durch die Koppelglieddrehachse sowie die Anlenkpleueldrehachse einerseits und einer gedachten Geraden durch die Koppelglieddrehachse sowie die Kolbenpleueldrehachse andererseits mindestens 140° und höchstens 180° beträgt. Die Erfindung betrifft weiterhin eine Brennkraftmaschine mit einem Mehrgelenkskurbeltrieb.

Der Mehrgelenkskurbeltrieb der eingangs genannten Art ist beispielsweise Bestandteil der Brennkraftmaschine, kann jedoch auch in anderen Bereichen Anwendung finden. Der Mehrgelenkskurbeltrieb umfasst die Exzenterwelle, deren Drehwinkel vorzugsweise mittels einer Stelleinrichtung, insbesondere in Abhängigkeit von einem Betriebspunkt der Brennkraftmaschine, verstellt werden kann. Alternativ oder zusätzlich kann die Exzenterwelle auch mit der Kurbelwelle der Brennkraftmaschine wirkverbunden und auf diese Weise von ihr antreibbar sein. Der Mehrgelenkskurbeltrieb verfügt über das Koppelglied, insbesondere über eine der Anzahl der Kolben der Brennkraftmaschine entsprechende Anzahl von Koppelgliedern. Das Koppelglied beziehungsweise die Koppelglieder sind jeweils drehbar auf dem entsprechenden Hubzapfen der Kurbelwelle gelagert. Bevorzugt weist das Koppelglied zwei nach entgegengesetzten Seiten über die Kurbelwelle überstehende, an ihrem Ende jeweils mit einem Schwenkgelenk versehene Arme auf. Selbstverständlich sind auch andere Ausführungsformen möglich. Die Drehachse des Koppelglieds um die Kurbelwelle beziehungsweise um den Hubzapfen der Kurbelwelle wird als Koppelglieddrehachse bezeichnet.

Eines der Schwenkgelenke dient zur schwenkbaren Verbindung mit der Kolbenpleuelstange, die einen der Kolben der Brennkraftmaschine über das Koppelglied mit der Kurbelwelle verbindet. Die Drehachse dieses Schwenkgelenks wird als Kolbenpleueldrehachse bezeichnet. Aufgrund der Verschwenkbarkeit des Koppelglieds ist die Kolbenpleueldrehachse nicht ortsfest, sondern wird zusammen mit dem Koppelglied verlagert beziehungsweise verschwenkt. Ein anderes der Schwenkgelenke dient zur schwenkbaren Verbindung mit der sogenannten Anlenkpleuelstange, welche mit ihrem anderen, dem Koppelglied gegenüberliegenden Ende drehbar auf dem Hubzapfen der Exzenterwelle gelagert ist. Die Drehachse dieses Schwenkgelenks wird als Anlenkpleueldrehachse bezeichnet, während die Drehachse der Anlenkpleuelstange auf dem Hubzapfen der Exzenterwelle im weiteren Verlauf als Exzenterdrehachse geführt wird.

Die Anlenkpleuelstange verfügt zur Ausbildung der Schwenkgelenke bevorzugt über zwei Pleuelaugen. Das erste Pleuelauge ist Bestandteil des Schwenkgelenks, über welches die Anlenkpleuelstange mit dem Koppelglied zusammenwirkt. Das erste Pleuelauge umgreift dabei beispielsweise einen an dem Koppelglied gehaltenen Koppelstift beziehungsweise Lagerbolzen. Das zweite Pleuelauge ist analog dazu Bestandteil des Schwenkgelenks, über welches die Anlenkpleuelstange mit der Exzenterwelle verbunden ist. Insbesondere umgreift das zweite Pleuelauge den Hubzapfen der Exzenterwelle wenigstens bereichsweise.

Mittels des Mehrgelenkskurbeltriebs kann das in dem dem Kolben jeweils zugeordneten Zylinder erreichte Verdichtungsverhältnis eingestellt werden, insbesondere in Abhängigkeit von einem Betriebspunkt der Brennkraftmaschine und/oder dem vorliegenden Arbeitstakt. Zum Verstellen des Verdichtungsverhältnisses wird die Exzenterwelle in eine bestimmte, dem gewünschten Verdichtungsverhältnis entsprechende Drehwinkelstellung gebracht und/oder die Phasenlage zwischen der Exzenterwelle und der Kurbelwelle auf einen bestimmten Wert eingestellt.

Die Lagerung des Koppelglieds auf der Kurbelwelle beziehungsweise dem Hubzapfen der Kurbelwelle ist mithilfe des Lagerauges realisiert. Das Lagerauge liegt dabei beispielsweise in Form eines Pleuelauges vor. Beispielsweise ist es als Ausnehmung des Koppelglieds realisiert, in welcher der Hubzapfen angeordnet ist und das Lagerauge vorzugsweise vollständig durchgreift. Die Lagerung des Koppelglieds auf dem Hubzapfen der Kurbelwelle ist beispielsweise als Gleitlagerung ausgeführt. Alternativ ist jedoch auch eine Wälzlagerung realisierbar.

Aus dem Stand der Technik ist beispielsweise die Druckschrift DE 10 2005 054 761 A1 bekannt. Diese beschreibt eine Brennkraftmaschine mit einem in einem Zylinder in einem Gehäuse verschieblich angeordneten Kolben, der mit einer Pleuelstange gelenkig gekoppelt ist, deren Bewegung auf einen Hubzapfen einer Kurbelwelle übertragbar ist. Zwischen der Pleuelstange und dem Hubzapfen ist ein Übertragungsglied vorgesehen, welches als Querhebel ausgebildet ist, der über ein Gelenk an einem Gelenkpunkt mit dem Hubzapfen gekoppelt ist. Dieses Gelenk liegt in einem Bereich zwischen einem ersten Lagerpunkt des Querhebels zur Pleuelstange und einem zweiten Lagerpunkt des Querhebels zum Nebenpleuel, und das Gelenk ist zwischen dem Querhebel und dem Hubzapfen mit Abstand zur Verbindungslinie zwischen den beiden Lagerpunkten des Querhebels zum Nebenpleuel und der Pleuelstange angeordnet.

In einer Hauptansicht des Querhebels wird dieser mit einem ebenen orthogonalen Achsensystem überlagert, wobei der Nullpunkt des Achsensystems im Gelenkpunkt angeordnet ist. Eine erste Achse geht durch den zweiten Lagerpunkt. Eine zweite Achse ist zur ersten Achse senkrecht. Durch die beiden Achsen ist eine Zeichenebene in vier Quadranten in mathematisch üblicher Weise aufgeteilt. Der erste Lagerpunkt ist dem zweiten Quadranten und ein Schwerpunkt des Querhebels in dem zweiten, dem dritten oder dem vierten Quadranten angeordnet. Die Bewegung des Querhebels wird über das Nebenpleuel gelenkt, das an seinem dem Querhebel abgewandten Ende drehbeweglich im Gehäuse gelagert ist.

Aus dem Stand der Technik sind weiterhin die Druckschriften JP 2004-124775 A sowie EP 1 180 588 A2 bekannt.

Grundsätzlich ist es bei der Auslegung der Brennkraftmaschine und mithin auch des Mehrgelenkskurbeltriebs das Ziel, das Gewicht, insbesondere von bewegten Bauteilen, soweit als möglich zu reduzieren, um entstehende Massenkräfte und die resultierenden massenproportionalen Lagekräfte so niedrig wie möglich zu halten.

Es ist daher Aufgabe der Erfindung, einen Mehrgelenkskurbeltrieb einer Brennkraftmaschine vorzuschlagen, welcher gegenüber bekannten Ausführungsformen Vorteile aufweist, insbesondere sich durch eine Reduzierung von freien Kräften zweiter Ordnung auszeichnet.

Dies wird erfindungsgemäß mit einem Mehrgelenkskurbeltrieb mit den Merkmalen des Anspruchs 1 erreicht. Dabei ist vorgesehen, dass ein Schwerpunkt des Koppelglieds außerhalb des Lagerauges angeordnet ist, wobei der Schwerpunkt auf einer dem Kolben der Brennkraftmaschine zugewandten Seite einer die Koppelglieddrehachse sowie die Anlenkpleueldrehachse aufnehmenden ersten Ebene angeordnet ist. Der Schwerpunkt kann grundsätzlich beliebig definiert sein, besonders bevorzugt entspricht er jedoch dem Massenmittelpunkt, dem Gravizentrum oder dem geometrischen Schwerpunkt des Koppelglieds. Bei bekannten Ausführungsformen liegt der Schwerpunkt nahe beziehungsweise in dem Lagerauge. Durch gezielte Maßnahmen kann jedoch die Verlagerung des Schwerpunkts derart vorgenommen werden, dass er außerhalb beziehungsweise weiter außerhalb des Lagerauges zu liegen kommt. Auf diese Maßnahmen wird nachfolgend beispielhaft eingegangen. Selbstverständlich können jedoch auch andere Maßnahmen zur entsprechenden Positionierung des Schwerpunkts realisiert werden. Durch die beschriebene Anordnung des Schwerpunkts wird eine Reduzierung der Hoch- und Querkraft in der zweiten Motorordnung erreicht, insbesondere wenn die Brennkraftmaschine als Reihenbrennkraftmaschine, besonders bevorzugt als Reihenbrennkraftmaschine mit vier Zylindern, vorliegt.

Beispielsweise kann es vorgesehen sein, dass die Drehachse der Exzenterwelle oberhalb derjenigen Ebene liegt, die eine Drehachse der Kurbelwelle aufnimmt und senkrecht auf wenigstens einer Zylinderlängsmittelachse steht. Die Ebene wird mithin von der Drehachse der Kurbelwelle und der Zylinderlängsmittelachse gemeinsam definiert. In Längsrichtung der Brennkraftmaschine - bezogen auf die Drehachse der Kurbelwelle - weist die Ebene dieselbe Position und Richtung auf wie diese Drehachse. Gleichzeitig soll sie auf der wenigstens einen Zylinderlängsmittelachse senkrecht stehen, sodass die Zylinderlängsmittelachse in normaler Richtung der Ebene vorliegt. Die Zylinderlängsmittelachse ist einem Zylinder der Brennkraftmaschine zugeordnet und erstreckt sich in dessen Längsrichtung. Die Zylinderlängsmittelachse liegt dabei beispielsweise über die Längserstreckung des Zylinders hinweg in dessen Mittelpunkt vor.

Selbstverständlich kann die Ebene auch senkrecht zu mehreren Zylinderlängsmittelachsen mehrerer Zylinder der Brennkraftmaschine vorliegen, besonders bevorzugt senkrecht auf den Zylinderlängsmittelachsen aller Zylinder der Brennkraftmaschine stehen. Die Exzenterwelle soll nun derart angeordnet sein, dass ihre Drehachse oberhalb dieser Ebene angeordnet ist. Besonders bevorzugt liegt die gesamte Exzenterwelle, also nicht lediglich ihre Drehachse, oberhalb dieser Ebene vor. Beispielsweise liegt die Drehachse der Exzenterwelle unmittelbar benachbart zu der Ebene vor, grenzt also an diese an. Alternativ ist dies für die gesamte Exzenterwelle der Fall. Es kann jedoch auch vorgesehen sein, dass die Drehachse der Exzenterwelle beziehungsweise die gesamte Exzenterwelle oberhalb der Ebene angeordnet ist und zusätzlich von ihr beabstandet vorliegt. Die Exzenterwelle liegt nun also in einer derartigen Ausführungsform bezüglich eines Zylinders der Brennkraftmaschine nicht mehr unten, sondern wurde mitsamt der Anlenkpleuelstange nach oben gedreht. Daraus resultiert vorzugsweise, dass die Kolbenpleuelstange und die Anlenkpleuelstange ausgehend von dem Koppelglied im Wesentlichen in dieselbe Richtung zeigen, nämlich in Richtung des Kolbens beziehungsweise des Zylinders. Es ist also nicht vorgesehen, dass die Anlenkpleuelstange ausgehend von dem Koppelhebel von dem Zylinder beziehungsweise dem Kolben weg weist beziehungsweise bezüglich des Koppelhebels dem Kolben gegenüberliegt.

Es ist vorgesehen, dass der Schwerpunkt auf einer dem Kolben der Brennkraftmaschine zugewandten Seite einer die Koppelglieddrehachse sowie die Anlenkpleueldrehachse aufnehmenden ersten Ebene angeordnet ist. Die erste Ebene ist also derart angeordnet, dass sowohl die Koppelglieddrehachse als auch die Anlenkpleueldrehachse in ihr verlaufen. Der Schwerpunkt soll bei einer Betrachtung des Koppelglieds von der Seite in seiner Einbaulage in der Brennkraftmaschine oberhalb dieser ersten Ebene liegen. Dabei kann es der Fall sein, dass der Schwerpunkt auf derselben Seite der ersten Ebene liegt wie die Kolbenpleueldrehachse.

Eine bevorzugte Ausgestaltung der Erfindung sieht vor, dass der Schwerpunkt auf derselben Seite einer senkrecht auf der ersten Ebene stehenden und die Koppelglieddrehachse aufnehmenden zweiten Ebene angeordnet ist wie die Anlenkpleueldrehachse. Die erste Ebene und die zweite Ebene teilen mithin das Koppelglied in vier Quadranten ein, die im Uhrzeigersinn durchnummeriert sind. Beispielsweise ist das Koppelglied derart ausgestaltet, dass sein Schwerpunkt in einem ersten der Quadranten liegt. Die Kolbenpleueldrehachse liegt dagegen bevorzugt in einem zweiten der Quadranten, während die in der ersten Ebene liegende Anlenkpleueldrehachse vorzugsweise ebenfalls in dem ersten der Quadranten angeordnet ist.

Eine Weiterbildung der Erfindung sieht vor, dass das Verhältnis aus dem Abstand des Schwerpunkts von der Koppelglieddrehachse zu einem Radius des Lagerauges mindestens 110 %, mindestens 120 %, mindestens 130 %, mindestens 140 % oder mindestens 150 % beträgt. Zunächst wird also der Abstand zwischen dem Schwerpunkt und der Koppelglieddrehachse ermittelt. Dieser Abstand wird mit dem Durchmesser des Lagerauges ins Verhältnis gesetzt, sodass sich also dieses Verhältnis aus einer Division des Abstands mit dem Radius ergibt. Weil der Schwerpunkt außerhalb des Lagerauges vorliegen soll, muss das Verhältnis größer als 100 % sein. Vorzugsweise ist es jedoch deutlich größer. Alternativ oder zusätzlich zu den vorstehend genannten Werten kann es mindestens 160%, mindestens 170%, mindestens 180%, mindestens 190% oder mindestens 200% betragen.

Eine weitere bevorzugte Ausgestaltung der Erfindung sieht vor, dass eine Zusatzmasse an dem Koppelglied befestigt ist. Die Zusatzmasse stellt ein separat von dem Koppelglied hergestelltes Element dar und wird erst beispielsweise während einer Montage des Mehrgelenkskurbeltriebs beziehungsweise der Brennkraftmaschine an dem Koppelglied befestigt. Beispielsweise ist die Zusatzmasse formschlüssig und/oder stoffschlüssig mit dem Koppelglied verbunden. Die formschlüssige Verbindung wird beispielsweise durch einen Bolzen, eine Schraubverbindung oder dergleichen realisiert. Die stoffschlüssige Verbindung kann insbesondere durch Schweißen, Kleben oder dergleichen hergestellt sein.

In einer bevorzugten Ausgestaltung der Erfindung ist dabei vorgesehen, dass die Zusatzmasse aus einem Material mit einer größeren Dichte besteht als das Koppelglied. Während selbstverständlich bereits durch die Anordnung einer beliebigen Zusatzmasse, welche beispielsweise aus demselben Material besteht wie das Koppelglied, eine Beeinflussung des Schwerpunkts erreicht werden kann, soll bevorzugt das Volumen der Zusatzmasse möglich gering gehalten werden, um den Bauraum des Mehrgelenkskurbeltriebs nicht unnötig zu vergrößern. Dies kann realisiert werden, indem die Zusatzmasse aus einem anderen Material hergestellt wird als das Koppelglied, beispielsweise aus einem Material, welches eine größere Dichte aufweist als das des Koppelglieds. Insbesondere ist die Dichte um mehr als 10 %, mehr als 20 %, mehr als 30 %, mehr als 40 % oder mehr als 50 % größer.

Eine bevorzugte Ausgestaltung der Erfindung sieht vor, dass die Zusatzmasse an einem Ausleger des Koppelglieds befestigt ist und/oder den Ausleger durchgreift. Der Ausleger erstreckt sich beispielsweise ausgehend von einem Grundkörper des Koppelglieds, weist also ein freies Ende auf, welches von diesem Grundkörper fort ragt. der Ausleger weist beispielsweise in axialer Richtung - vorzugsweise bezogen auf die Koppelglieddrehachse - geringere Abmessungen auf als weitere Bereiche des Koppelglieds, insbesondere des Grundkörpers. Es kann vorgesehen sein, dass die Zusatzmasse formschlüssig an dem Ausleger befestigt ist. Zu diesem Zweck durchgreift sie ihn beispielsweise, insbesondere in axialer Richtung, vollständig. Die Zusatzmasse und/oder der Ausleger sind bevorzugt in demselben Quadranten angeordnet wie der Schwerpunkt, beispielsweise also in dem ersten der Quadranten.

Eine Weiterbildung der Erfindung sieht vor, dass das Lagerauge von einem Grundkörper des Koppelglieds und einem Lagerdeckel ausgebildet ist, wobei der Lagerdeckel aus einem Material mit einer geringeren Dichte besteht als der Grundkörper. Das Koppelglied ist insoweit mehrteilig ausgestaltet und besteht zumindest aus dem Grundkörper und dem Lagerdeckel, welcher mit dem Grundkörper verbunden ist. Beispielsweise sind zur Befestigung des Lagerdeckels an dem Grundkörper zumindest eine Schraubverbindung, vorzugsweise wenigstens zwei Schraubverbindungen, vorgesehen. Zwischen dem Grundkörper und dem Lagerdeckel kann in einer bevorzugten Ausgestaltung der Erfindung eine Lagerbuchse angeordnet sein, welche ihrerseits den Hubzapfen der Kurbelwelle umgreift. Alternativ können selbstverständlich der Grundkörper sowie der Lagerdeckel unmittelbar in Berührkontakt beziehungsweise Gleitkontakt mit dem Hubzapfen der Kurbelwelle stehen.

Das Lagerauge wird also von dem Grundkörper und dem Lagerdeckel gemeinsam ausgebildet, wobei bevorzugt der Grundkörper und der Lagerdeckel jeweils - in Umfangsrichtung bezüglich der Koppelglieddrehachse gesehen - die Hälfte des Lagerauges bereitstellen. Der Lagerdeckel liegt vorzugsweise zumindest teilweise in dem dritten und/oder vierten der Quadranten vor. Entsprechend kann der Schwerpunkt in Richtung des ersten Quadranten beziehungsweise weiter in diesen hineinverlagert werden, wenn der Lagerdeckel leichter wird. Dies kann durch die geringere Dichte des Materials des Lagerdeckels im Vergleich mit dem Material des Grundkörpers realisiert werden.

Schließlich kann vorgesehen sein, dass der Lagerdeckel überwiegend auf der dem Kolben abgewandten Seite der ersten Ebene angeordnet ist. Dies wurde bereits vorstehend mit einer alternativen Formulierung angedeutet. Der Schwerpunkt und der Lagerdeckel liegen also zumindest teilweise auf unterschiedlichen Seiten der ersten Ebene vor. Die überwiegende Anordnung des Lagerdeckels auf dieser Seite wird dadurch erzielt, dass wenigstens 50 %, wenigstens 60 %, wenigstens 70 %, wenigstens 80 % oder wenigstens 90 % seiner Masse auf dieser Seite der ersten Ebene vorliegen:

In einer besonders bevorzugten Ausgestaltung der Erfindung kann vorgesehen sein, dass jeweils bezogen auf einen Gesamtkolbenhub des Kolbens der Abstand zwischen der Kolbendrehachse und der Kolbenpleueldrehachse wenigstens 1,41 und höchstens 1,61 beträgt, und/oder der Abstand zwischen der Kolbenpleueldrehachse und der Koppelglieddrehachse wenigstens 0,38 und höchstens 0,58 beträgt, und/oder der Abstand zwischen der Koppelglieddrehachse und der Anlenkpleueldrehachse mindestens 0,82 und höchstens 1,02 beträgt, und/oder der Abstand zwischen der Anlenkpleueldrehachse und der Exzenterdrehachse wenigstens 1,63 und höchstens 1,83 beträgt. Bevorzugt ist es vorgesehen, dass mehrere dieser Bedingungen, insbesondere mindestens drei dieser Bedingungen, besonders bevorzugt alle dieser Bedingungen erfüllt sind.

Bekannte Mehrgelenkskurbeltriebe werden üblicherweise bauraumoptimiert ausgelegt. Daraus folgt, dass die kinematisch wirksamen Längen des Mehrgelenkskurbeltriebs in Relation zu dem Kolbenhub des Kolbens klein sind. Die Kräfte in den Schwenklagern eines derartigen Mehrgelenkskurbeltriebs sind vergleichsweise groß und müssen einen großen Schwenkwinkel und damit entsprechend langen Weg zurücklegen. Die entstehende Reibarbeit, die das Produkt aus Kraft und Weg darstellt und in Wärme umgewandelt wird, ist demzufolge ebenfalls hoch. Wird wenigstens eine der genannten Bedingungen umgesetzt, so können die Reibung des Mehrgelenkskurbeltriebs und/oder die an der Kurbelwelle der Brennkraftmaschine anliegende Torsionsbelastung reduziert werden.

Selbstverständlich kann es alternativ vorgesehen sein, dass lediglich der genannte Abstand zwischen der Kolbendrehachse und der Kolbenpleueldrehachse oder lediglich der genannte Abstand zwischen der Kolbenpleueldrehachse und der Koppelglieddrehachse oder lediglich der genannte Abstand zwischen der Koppelglieddrehachse und der Anlenkpleueldrehachse oder lediglich der genannte Abstand zwischen der Anlenkpleueldrehachse und der Exzenterdrehachse realisiert ist. Auch eine beliebige Kombination der genannten Abstände kann vorgesehen sein. Beispielsweise sind wenigstens zwei, insbesondere genau zwei, der genannten Abstände oder wenigstens drei, insbesondere genau drei, der genannten Abstände realisiert.

Mithilfe der genannten Abstände zwischen den Drehachsen konnte überraschenderweise die Phasenlage der maximalen Massenkraft und der zu diesem Zeitpunkt vorliegende Kurbelwellenhebelarm dahingehend verbessert werden, dass das massenkraftbedingte Torsionsmoment in der Kurbelwelle deutlich abnimmt, insbesondere um mindestens 10 %, mindestens 20 % oder mindestens 30 %.

Selbstverständlich kann der Abstand zwischen der Kolbendrehachse und der Kolbenpleueldrehachse - bezogen auf den Gesamtkolbenhub - wenigstens 1,46 und höchstens 1,56 oder wenigstens 1,49 und höchstens 1,53, besonders bevorzugt 1,51 betragen.

Zusätzlich oder alternativ kann der Abstand zwischen der Kolbenpleueldrehachse und der Koppelglieddrehachse - bezogen auf den Gesamtkolbenhub - wenigstens 0,43 und höchstens 0,53, insbesondere wenigstens 0,46 und höchstens 0,50, besonders bevorzugt 0,48 betragen.

In einer weiteren Ausgestaltung kann zudem vorgesehen sein, dass der Abstand zwischen der Koppelglieddrehachse und der Anlenkpleueldrehachse - bezogen auf den Gesamtkolbenhub - mindestens 0,87 und höchstens 0,97, insbesondere mindestens 0,90 und höchstens 0,94, besonders bevorzugt 0,92 beträgt.

Schließlich kann vorgesehen sein, dass der Abstand zwischen der Anlenkpleueldrehachse und der Exzenterdrehachse - bezogen auf den Gesamtkolbenhub - wenigstens 1,68 und höchstens 1,78, insbesondere wenigstens 1,71 und höchstens 1,75, besonders bevorzugt 1,73 beträgt.

Eine weitere Ausgestaltung der Erfindung sieht vor, dass bezogen auf den Gesamtkolbenhub der horizontale Abstand zwischen der Drehachse der Exzenterwelle und der Drehachse der Kurbelwelle - bezogen auf den Gesamtkolbenhub - mindestens 0,64 und höchstens 0,84 beträgt. Der horizontale Abstand liegt dabei beispielsweise in einer Richtung vor, welche auf der Zylinderlängsmittelachse senkrecht steht. Unter den angegebenen Werten sind dabei Absolutwerte zu verstehen. Beispielsweise beträgt der genannte Abstand mindestens 0,69 und höchstens 0,79, insbesondere mindestens 0,72 und höchstens 0,76, besonders bevorzugt 0,74.

Eine weitere Ausgestaltung der Erfindung sieht vor, dass bezogen auf den Gesamtkolbenhub der vertikale Abstand zwischen der Drehachse der Exzenterwelle und der Drehachse der Kurbelwelle mindestens 1,67 und höchstens 2,07 beträgt. Der vertikale Abstand liegt bevorzugt in einer Richtung vor, welche zu der Zylinderlängsmittelachse parallel ist. Auch hier sind die angegebenen Werte als Absolutwerte zu verstehen. Besonders bevorzugt liegt jedoch die Drehachse der Exzenterwelle über der Drehachse der Kurbelwelle, also ausgehend von der Kurbelwelle in Richtung des Kolbens beziehungsweise des Zylinders. Der genannte Abstand beträgt bevorzugt mindestens 1,72 und höchstens 2,02, insbesondere mindestens 1,85 und höchstens 1,89, besonders bevorzugt 1,87, jeweils auf den Gesamtkolbenhub bezogen.

Eine Weiterbildung der Erfindung sieht vor, dass bezogen auf den Gesamtkolbenhub der Abstand zwischen der Koppelglieddrehachse und der Drehachse der Kurbelwelle mindestens 0,23 und höchstens 0,43 beträgt. Der genannte Abstand entspricht einem Kurbelradius der Kurbelwelle, also dem Abstand zwischen dem Hubzapfen der Kurbelwelle und der Drehachse der Kurbelwelle. Der genannte Abstand beträgt bevorzugt mindestens 0,28 und höchstens 0,38, insbesondere mindestens 0,31 und höchstens 0,35, besonders bevorzugt 0,33.

In einer besonders bevorzugten Ausführungsform der Erfindung ist vorgesehen, dass bezogen auf den Gesamtkolbenhub eine Schränkung mindestens 0,11 und höchstens 0,31 beträgt. Unter der Schränkung ist eine Parallelverlagerung der Drehachse der Kurbelwelle zu der Zylinderlängsmittelachse beziehungsweise einer Kolbenlängsmittelachse zu verstehen. Die Drehachse der Kurbelwelle fällt also bei einer Schränkung von Null auf die Zylinderlängsmittelachse beziehungsweise die Kolbenlängsmittelachse. Bei einer Schränkung von größer als Null liegt sie dagegen beabstandet zu dieser vor. Die Schränkung beträgt bevorzugt 0,16 und höchstens 0,26, insbesondere mindestens 0,19 und höchstens 0,23, besonders bevorzugt 0,21, bezogen auf den Gesamtkolbenhub.

Dabei kann es vorgesehen sein, dass die Schränkung zur Gegendruckseite vorliegt, insbesondere die Drehachse der Kurbelwelle auf der der Exzenterwelle zugewandten Seite der Kolbenlängsmittelachse angeordnet ist. Grundsätzlich besteht die Möglichkeit, dass die Schränkung entweder zur Druckseite oder zur Gegendruckseite vorgesehen ist. Selbstverständlich sind im Rahmen der Erfindung beide Ausführungsformen realisierbar. Besonders bevorzugt ist jedoch die Schränkung hin zu der Gegendruckseite ausgeführt. Die Erfindung sieht vor, dass ein Koppelwinkel zwischen einer gedachten Geraden durch die Koppelglieddrehachse sowie die Anlenkpleueldrehachse einerseits und einer gedachten Geraden durch die Koppelglieddrehachse und die Kolbenpleueldrehachse andererseits mindestens 140° und höchstens 180° beträgt. Der Koppelwinkel beschreibt im Wesentlichen die Anwinkelung zweier Arme des Koppelglieds zueinander. Ein erster der Arme verbindet dabei die Koppelglieddrehachse mit der Anlenkpleueldrehachse, während ein weiterer der Arme die Koppelglieddrehachse und die Kolbenpleueldrehachse miteinander verbindet.

Der Koppelwinkel wird durch die zwei gedachten Geraden charakterisiert, wobei sich diese jeweils durch zwei der genannten Drehachsen, also die Koppelglieddrehachse und die Anlenkpleueldrehachse einerseits sowie die Koppelglieddrehachse und die Kolbenpleueldrehachse andererseits, erstrecken. Der Koppelwinkel beträgt besonders bevorzugt mindestens 150° und höchstens 170°, insbesondere mindestens 155° und höchstens 165°, besonders bevorzugt genau 160°.

Eine weitere vorteilhafte Ausgestaltung der Erfindung sieht vor, dass bezogen auf den Gesamtkolbenhub der Abstand zwischen der Drehachse der Exzenterwelle und der Exzenterdrehachse mindestens 0,045 und höchstens 0,065 beträgt. Der Abstand charakterisiert insoweit einen Kurbelradius der Exzenterwelle, also einen Abstand zwischen dem Hubzapfen der Exzenterwelle und der Drehachse der Exzenterwelle. Beispielsweise beträgt der genannte Abstand mindestens 0,050 und höchstens 0,060, insbesondere mindestens 0,051 und höchstens 0,057. Besonders bevorzugt beträgt er 0,055.

Schließlich kann vorgesehen sein, dass der Gesamtkolbenhub mindestens 70 mm und höchstens 120 mm beträgt. Selbstverständlich kann der Gesamtkolbenhub grundsätzlich beliebig ausgestaltet sein und in Abhängigkeit von einer beabsichtigten Leistung der Brennkraftmaschine gewählt werden. Beispielsweise liegt er jedoch zwischen den genannten Werten (diese jeweils einschließend) oder beträgt mindestens 80 mm und höchstens 110 mm, insbesondere mindestens 90 mm und höchstens 100 mm. Er kann jedoch auch mindestens 91 mm und höchstens 95 mm, besonders bevorzugt 93,5 mm betragen.

Die Erfindung betrifft weiterhin eine Brennkraftmaschine mit einem Mehrgelenkskurbeltrieb. Dabei ist vorgesehen, dass der Mehrgelenkskurbeltrieb gemäß den vorstehenden Ausführungen ausgebildet ist. Auf die Vorteile einer derartigen Ausgestaltung des Mehrgelenkskurbeltriebs beziehungsweise der Brennkraftmaschine wurde bereits hingewiesen. Sowohl die Brennkraftmaschine als auch der Mehrgelenkskurbeltrieb können gemäß den vorstehenden Ausführungen weitergebildet sein, sodass insoweit auf diese verwiesen wird.

Die Erfindung wird nachfolgend der in der Zeichnung dargestellten Ausführungsbeispiele näher erläutert, ohne dass eine Beschränkung der Erfindung erfolgt. Dabei zeigt:
- Figur 1: eine schematische Darstellung einer Brennkraftmaschine mit einem Mehrgelenkskurbeltrieb,
- Figur 2: eine erste Ausführungsform eines Koppelglieds des Mehrgelenkskurbeltriebs in einer Seitenansicht,
- Figur 3: die erste Ausführungsform des Koppelglieds in einer alternativen Ansicht,
- Figur 4: eine zweite Ausführungsform des Koppelglieds,
- Figur 5: eine dritte Ausführungsform des Koppelglieds, und
- Figur 6: eine vierte Ausführungsform des Koppelglieds.

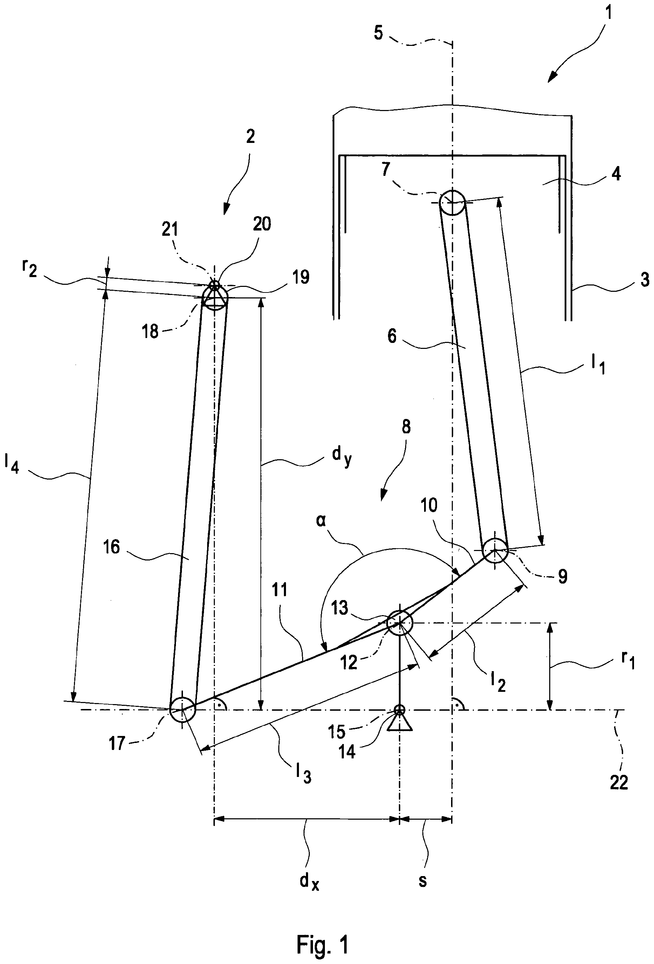

Die Figur 1 zeigt einen Bereich einer Brennkraftmaschine 1 mit einem Mehrgelenkskurbeltrieb 2. Die Brennkraftmaschine 1 verfügt zudem über wenigstens einen in einem Zylinder 3 längsbeweglich angeordneten Kolben 4. Der Zylinder 3 beziehungsweise der Kolben 4 weist eine Längsmittelachse 5 auf. An dem Kolben 4 greift eine Kolbenpleuelstange 6 an, die an dem Kolben 4 um eine Kolbendrehachse 7 drehbar gelagert ist. Die Kolbendrehachse 7 befindet sich dabei bevorzugt auf der Längsmittelachse 5 des Zylinders 3.

Auf ihrer dem Kolben 4 abgewandten Seite ist die Kolbenpleuelstange 6 mit einem Koppelglied 8 verbunden. Dabei ist die Kolbenpleuelstange 6 an dem Koppelglied 8 um eine Kolbenpleueldrehachse 9 drehbar gelagert. Insbesondere greift die Kolbenpleuelstange 6 an einem ersten Arm 10 des Koppelglieds 8 an. Dieser ist mit einem zweiten Arm 11 unter einem Winkel α starr verbunden. Der Winkel α liegt dabei um eine Koppelglieddrehachse 12 herum vor. In dieser Koppelglieddrehachse 12 laufen also die beiden Arme 10 und 11 ineinander. Das Koppelglied 8 ist um die Koppelglieddrehachse 12 drehbar auf einem Hubzapfen 13 einer Kurbelwelle 14 gelagert. Der Hubzapfen 13 beziehungsweise die Koppelglieddrehachse 12 ist dabei exzentrisch zu einer Drehachse 15 der Kurbelwelle 14 angeordnet.

Auf der der Kolbenpleuelstange 6 abgewandten Seite des Koppelglieds 8 greift eine Anlenkpleuelstange 16 an dem Koppelglied 8 an, insbesondere also an dem zweiten Arm 11. Dabei ist die Anlenkpleuelstange 16 um eine Anlenkpleueldrehachse 17 drehbar an dem Koppelglied 8 gelagert. Auf der dem Koppelglied 8 abgewandten Seite der Anlenkpleuelstange 16 ist die Anlenkpleuelstange 16 um eine Exzenterdrehachse 18 drehbar an einem Hubzapfen 19 einer Exzenterwelle 20 gelagert. Die Exzenterwelle 20 weist wiederum eine Drehachse 21 auf. Der Hubzapfen 19 beziehungsweise die Exzenterdrehachse 18 sind exzentrisch zu der Drehachse 21 der Exzenterwelle 20 vorgesehen.

Es ist nun vorgesehen, dass die Drehachse 21 der Exzenterwelle 20 oberhalb einer Ebene 22 angeordnet ist, die die Drehachse 15 der Kurbelwelle 15 aufnimmt und senkrecht auf der Zylinderlängsmittelachse 5 steht. Diese Anordnung wird als "obenliegende Exzenterwelle" bezeichnet.

In der Figur ist nun ein Abstand zwischen der Kolbendrehachse 7 und der Kolbenpleueldrehachse 9 mit I₁ bezeichnet. Der Abstand zwischen der Kolbenpleueldrehachse 9 und der Koppelglieddrehachse 12 ist als I₂ geführt. Der Abstand zwischen der Koppelglieddrehachse 12 und der Anlenkpleueldrehachse 17 ist als I₃ und der Abstand zwischen der Anlenkpleueldrehachse 17 und der Exzenterdrehachse 18 als I₄ bezeichnet. Besonders vorteilhaft gilt nun für diese Abstände:
- 1,41 ≤I₁ ≤1,61, und/oder
- 0,38 ≤I₂ ≤0,58, und/oder
- 0,82 ≤I₃ ≤1,02, und/oder
- 1,63 ≤I₄ ≤1,83.

Die genannten Werte sind dabei auf einen Gesamtkolbenhub des Kolbens 4 bezogen, welcher beispielsweise mindestens 70 mm und höchstens 120 mm beträgt.

Weiterhin kann es vorgesehen sein, dass ein horizontaler Abstand dₓ zwischen der Drehachse 21 der Exzenterwelle 20 und der Drehachse 15 der Kurbelwelle 14 bezogen auf den Gesamtkolbenhub des Kolbens 4 mindestens 0,64 und höchstens 0,84 beträgt. Zusätzlich oder alternativ beträgt der vertikale Abstand d_{y} zwischen der Drehachse 21 der Exzenterwelle 20 und der Drehachse 15 der Kurbelwelle 14 mindestens 1,64 und höchstens 2,07, wiederum bezogen auf den Gesamtkolbenhub.

Weiterhin kann es vorgesehen sein, dass bezogen auf den Gesamtkurbelhub der Kurbelradius der Kurbelwelle 14, also der Abstand zwischen der Koppelglieddrehachse 12 und der Drehachse 15 der Kurbelwelle 14 mindestens 0,23 und höchstens 0,43 beträgt. Dieser Kurbelradius ist hier als r₁ bezeichnet. Auch die Exzenterwelle 20 weist einen Hub auf, welcher als r₂ bezeichnet und als Abstand zwischen der Exzenterdrehachse 18 und der Drehachse 21 der Exzenterwelle 20 definiert ist. Der Kurbelradius r₂ der Exzenterwelle 20 beträgt - bezogen auf den Gesamtkolbenhub - beispielsweise mindestens 0,045 und höchstens 0,065.

Zusätzlich kann bei dem hier beschriebenen Mehrgelenkskurbeltrieb 2 eine Schränkung s vorgesehen sein, welche insoweit als horizontaler Abstand zwischen der Drehachse 15 der Kurbelwelle 14 und der Zylinderlängsmittelachse 5 definiert ist. Die Schränkung s beträgt bezogen auf den Gesamtkolbenhub beispielsweise mindestens 0,11 und höchstens 0,31. Dabei liegt die Schränkung s zur Gegendruckseite hin vor. Die Drehachse 15 der Kurbelwelle 14 ist also auf derjenigen Seite der Längsmittelachse 5 angeordnet, auf welcher auch die Drehachse 21 der Exzenterwelle 20 vorliegt.

Der vorstehend bereits erwähnte Koppelwinkel α definiert sich durch den Schnittwinkel zwischen einer gedachten Geraden, die durch die Koppelglieddrehachse 12 und die Anlenkpleueldrehachse 17 verläuft, mit einer gedachten Geraden, die durch die Koppelglieddrehachse 12 und die Kolbenpleueldrehachse 9 verläuft. Der Koppelwinkel α beträgt beispielsweise mindestens 140 Grad und höchstens 180 Grad, kann jedoch selbstverständlich grundsätzlich beliebig gewählt sein.

Die hier dargestellte Brennkraftmaschine 1 verfügt selbstverständlich bevorzugt über mehrere Zylinder 3 und mithin mehrere Kolben 3. Entsprechend weist der Mehrgelenkskurbeltrieb 2 mehrere der ihm zugeordneten Elemente auf, insbesondere für jeden Kolben 4 eine Kolbenpleuelstange 6, ein Koppelglied 8 sowie eine Anlenkpleuelstange 16. Diese genannten Elemente sind jeweils gemäß den vorstehenden Ausführungen ausgestaltet. Grundsätzlich kann die Anzahl der Zylinder 3 beziehungsweise der Kolben 4 der Brennkraftmaschine 1 beliebig gewählt sein. Insbesondere beträgt sie 2, 3, 4, 5, 6, 8 oder 12. Ist die Brennkraftmaschine 1 mit vier Zylindern ausgestattet, so beträgt der Kröpfungswinkel der Kurbelwelle 14 bevorzugt 180 Grad.

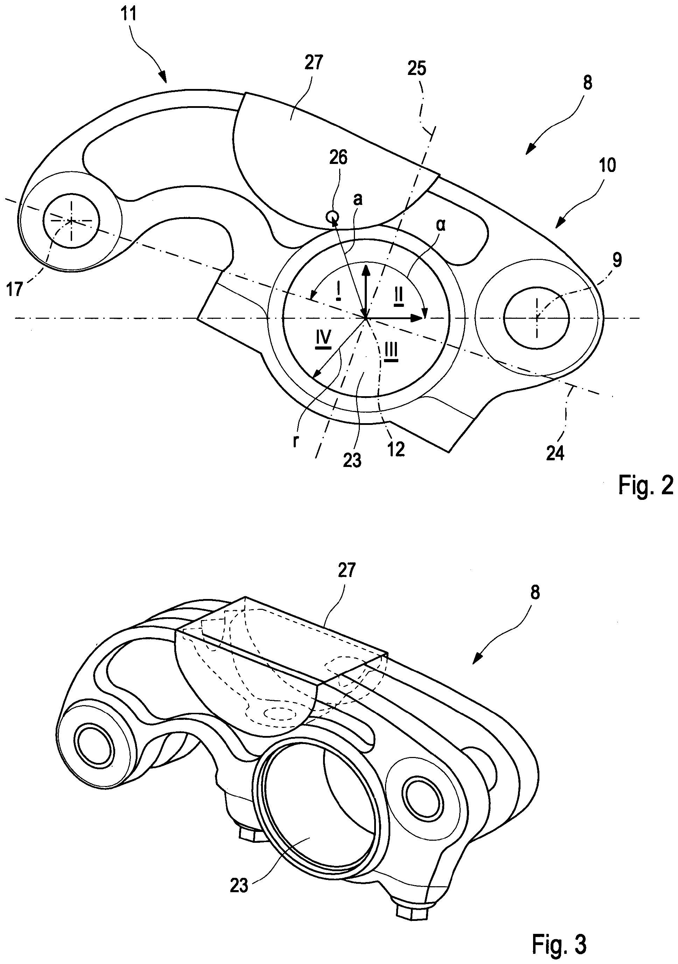

Die Figur 2 zeigt eine Seitenansicht des Koppelglieds 8 in einer ersten Ausführungsform. Es wird deutlich, dass das Koppelglied 8 ein Lagerauge 23 aufweist, welches nach der Montage der Brennkraftmaschine 1 den Hubzapfen 13 der Kurbelwelle 14 aufnimmt. Eine erste Ebene 24 wird nun von der Koppelglieddrehachse 12 sowie der Anlenkpleueldrehachse 17 definiert. Dabei ist die Ebene 24 derart angeordnet, dass sie diese beiden Drehachsen 12 und 17 in sich aufnimmt. Eine zweite Ebene 25 steht senkrecht auf dieser ersten Ebene 24 und ist derart angeordnet, dass sie ebenfalls die Koppelglieddrehachse 12 in sich aufnimmt. Die beiden Ebenen 24 und 25 definieren somit vier Quadranten I, II, III und IV, die ebenfalls angedeutet sind.

Das Koppelglied 8 soll nun derart ausgestaltet sein, dass ein Schwerpunkt 26 des Koppelglieds 8 außerhalb des Lagerauges 23 angeordnet ist. Das bedeutet, dass beispielsweise das Verhältnis aus dem Abstand a des Schwerpunkts 26 von der Koppelglieddrehachse 12 zu dem Radius r des Lagerauges 23 mehr als 100 %, mindestens 110 %, mindestens 120 %, mindestens 130 %, mindestens 140 % oder mindestens 150 % beträgt. Die gewünschte Anordnung des Schwerpunkts 26 ist im Falle der ersten Ausführungsform durch die Anordnung einer Zusatzmasse 27 an dem Koppelglied 8 realisiert.

Die Figur 3 zeigt eine weitere Ansicht der ersten Ausführungsform des Koppelglieds 8. Dabei ist deutlich die Zusatzmasse 27 zu erkennen, welche beispielsweise formschlüssig mit dem Koppelglied 8 verbunden ist. Zusätzlich oder alternativ kann selbstverständlich eine stoffschlüssige Befestigung vorgenommen sein.

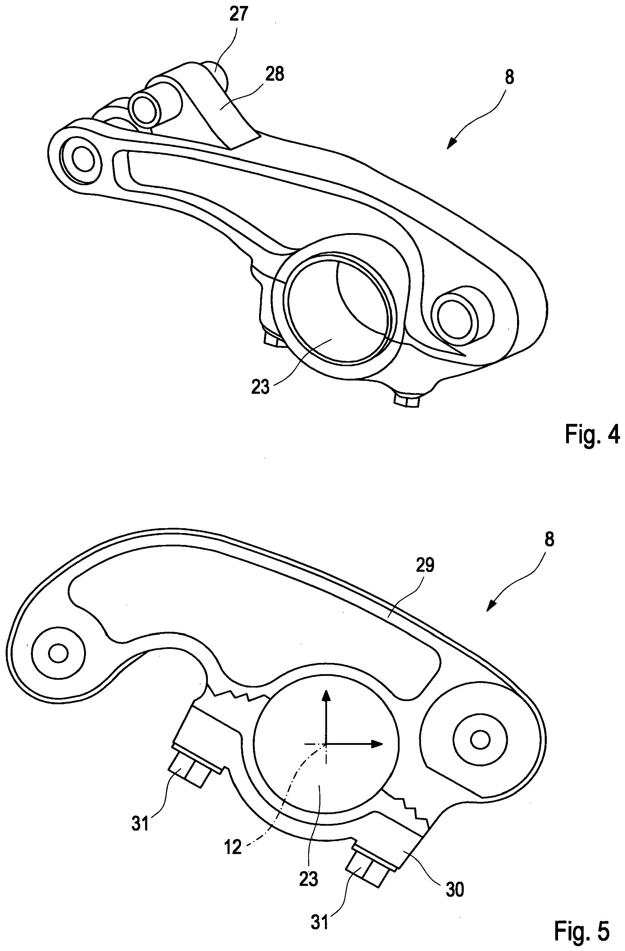

Die Figur 4 zeigt eine zweite Ausführungsform des Koppelglieds 8. Grundsätzlich wird auf die vorstehenden Ausführungen verwiesen. Im Unterschied zu der ersten Ausführungsform weist die zweite Ausführungsform einen Ausleger 28 auf, welcher sich in den Quadrant I hinein erstreckt und dabei insbesondere von der Koppelglieddrehachse 12 fort gerichtet ist. Die Zusatzmasse 27 ist nun an dem Ausleger 28 befestigt, insbesondere formschlüssig. Zu diesem Zweck durchgreift beispielsweise die Zusatzmasse 27 den Ausleger 28. Bevorzugt ist die Zusatzmasse 27 kreiszylinderförmig ausgestaltet. Eine Längsmittelachse der Zusatzmasse 27 ist in dem hier dargestellten Ausführungsbeispiel vorzugsweise parallel zu der Koppelglieddrehachse 12 angeordnet.

Die Figur 5 zeigt eine dritte Ausführungsform des Koppelglieds 8. Es wird wiederum zunächst auf die vorstehenden Ausführungen verwiesen. In der dritten Ausführungsform weist das Koppelglied 8 einen Grundkörper 29 und einen Lagerdeckel 30 auf. Der Grundkörper 29 und der Lagerdeckel 30 bilden gemeinsam das Lagerauge 23 aus beziehungsweise umgreifen dieses. Der Lagerdeckel 30 ist beispielsweise mit wenigstens einer Schraubverbindung 31, bevorzugt mindestens zwei Schraubverbindungen 31, an dem Grundkörper 29 befestigt. Es ist erkennbar, dass der Lagerdeckel 30 überwiegend in den Quadranten III und IV angeordnet ist. Der Lagerdeckel 30 soll aus einem Material bestehen, welches eine geringere Dichte aufweist als das Material des Grundkörpers 29. Entsprechend kann der Schwerpunkt 26 (hier nicht dargestellt) von der Koppelglieddrehachse 12 in den Quadranten I verschoben werden.

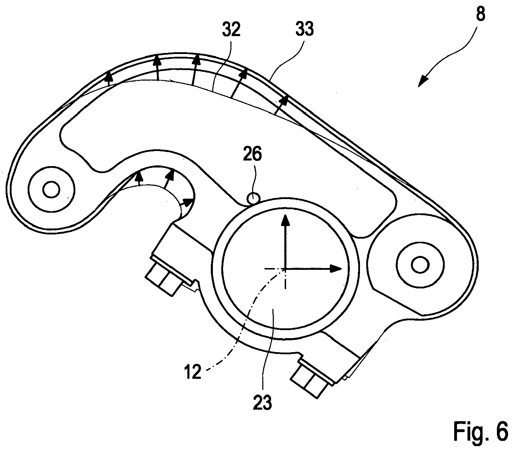

Die Figur 6 zeigt eine vierte Ausführungsform des Koppelglieds 8. Auch hier sei wiederum zunächst auf die vorstehenden Ausführungen verwiesen. Eine Kontur 32 deutet hier die Außenkontur des Koppelglieds 8 gemäß der ersten Ausführungsform ohne die Zusatzmasse 27 an. Um nun die gewünschte Anordnung des Schwerpunkts 26 auch ohne diese Zusatzmasse 27 zu erzielen, wird eine Kontur 33 des Koppelglieds 8 derart gewählt, dass aus der Massenverteilung des Koppelglieds 8 der gewünschte Schwerpunkt 26 resultiert.

### BEZUGSZEICHENLISTE

- 1: Brennkraftmaschine
- 2: Mehrgelenkskurbeltrieb
- 3: Zylinder
- 4: Kolben
- 5: Kolbenlängsmittelachse
- 6: Kolbenpleuelstange
- 7: Kolbendrehachse
- 8: Koppelglied
- 9: Kolbenpleueldrehachse
- 10: 1. Arm
- 11: 2. Arm
- 12: Koppelglieddrehachse
- 13: Hubzapfen
- 14: Kurbelwelle
- 15: Drehachse
- 16: Anlenkpleuelstange
- 17: Anlenkpleueldrehachse
- 18: Exzenterdrehachse
- 19: Hubzapfen
- 20: Exzenterwelle
- 21: Drehachse
- 22: Ebene
- 23: Lagerauge
- 24: 1. Ebene
- 25: 2. Ebene
- 26: Schwerpunkt
- 27: Zusatzmasse
- 28: Ausleger
- 29: Grundkörper
- 30: Lagerdeckel
- 31: Schraubverbindung
- 32: Kontur
- 33: Kontur

## Patentansprüche

1. Mehrgelenkskurbeltrieb (2) einer Brennkraftmaschine (1), mit wenigstens einem um eine Koppelglieddrehachse (12) drehbar auf einem Hubzapfen (13) einer Kurbelwelle (14) gelagerten Koppelglied (8) und wenigstens einer um eine Exzenterdrehachse (18) drehbar auf einem Hubzapfen (19) einer Exzenterwelle (20) gelagerten Anlenkpleuelstange (16), wobei das Koppelglied (8) um eine Kolbenpleueldrehachse (9) schwenkbar mit einer Kolbenpleuelstange (6) eines Kolbens (4) der Brennkraftmaschine (1) und um eine Anlenkpleueldrehachse (17) schwenkbar mit der Anlenkpleuelstange (16) verbunden ist, wobei das Koppelglied (8) ein den Hubzapfen (13) der Kurbelwelle (14) aufnehmendes Lagerauge (23) aufweist, und wobei ein Schwerpunkt (26) des Koppelglieds (8) außerhalb des Lagerauges (23) angeordnet ist, wobei der Schwerpunkt (26) auf einer dem Kolben (4) der Brennkraftmaschine (1) zugewandten Seite einer die Koppelglieddrehachse (12) sowie die Anlenkpleueldrehachse (17) aufnehmenden ersten Ebene (24) angeordnet ist, **dadurch gekennzeichnet, dass** ein Koppelwinkel (α) zwischen einer gedachten Geraden durch die Koppelglieddrehachse (12) sowie die Anlenkpleueldrehachse (17) einerseits und einer gedachten Geraden durch die Koppelglieddrehachse (12) sowie die Kolbenpleueldrehachse (9) andererseits mindestens 140° und höchstens 180° beträgt.

2. Mehrgelenkskurbeltrieb nach Anspruch 1, **dadurch gekennzeichnet, dass** der Schwerpunkt (26) auf derselben Seite einer senkrecht auf der ersten Ebene (24) stehenden und die Koppelglieddrehachse (12) aufnehmenden zweiten Ebene (25) angeordnet ist wie die Anlenkpleueldrehachse (17).

3. Mehrgelenkskurbeltrieb nach einem der vorhergehenden Ansprüche, **dadurch gekennzeichnet, dass** das Verhältnis aus dem Abstand (a) des Schwerpunkts (26) von der Koppelglieddrehachse (12) zu einem Radius (r) des Lagerauges (23) mindestens 110 %, mindestens 120 %, mindestens 130 %, mindestens 140 % oder mindestens 150 % beträgt.

4. Mehrgelenkskurbeltrieb nach einem der vorhergehenden Ansprüche, **dadurch gekennzeichnet, dass** eine Zusatzmasse (27) an dem Koppelglied (8) befestigt ist.

5. Mehrgelenkskurbeltrieb nach Anspruch 4, **dadurch gekennzeichnet, dass** die Zusatzmasse (27) aus einem Material mit einer größeren Dichte besteht als das Koppelglied (8).

6. Mehrgelenkskurbeltrieb nach Anspruch 4 oder 5, **dadurch gekennzeichnet, dass** die Zusatzmasse (27) an einem Ausleger (28) des Koppelglieds (8) befestigt ist und/oder den Ausleger (28) durchgreift.

7. Mehrgelenkskurbeltrieb nach einem der vorhergehenden Ansprüche, **dadurch gekennzeichnet, dass** das Lagerauge (23) von einem Grundkörper (29) des Koppelglieds (8) und einem Lagerdeckel (30) ausgebildet ist, wobei der Lagerdeckel (30) aus einem Material mit einer geringeren Dichte besteht als der Grundkörper (29).

8. Mehrgelenkskurbeltrieb nach Anspruch 7, **dadurch gekennzeichnet, dass** der Lagerdeckel (30) überwiegend auf der dem Kolben (4) abgewandten Seite der ersten Ebene (24) angeordnet ist.

9. Brennkraftmaschine (1), **gekennzeichnet durch** einen Mehrgelenkskurbeltrieb (2) nach einem oder mehreren der vorhergehenden Ansprüche.

## Claims

1. Multi-joint crank drive (2) of an internal combustion engine (1), with at least one coupling member (8) mounted rotatably about a coupling member rotation axis (12) on a crankpin (13) of a crankshaft (14) and at least one connecting rod (16) mounted rotatably about an eccentric rotation axis (18) on a crankpin (19) of an eccentric shaft (20), wherein the coupling member (8) is connected with a piston rod (6) of a piston (4) of the internal combustion engine (1) for pivoting about a piston rod rotation axis (9) and with the connecting rod (16) for pivoting about a connecting rod rotation axis (17), wherein the coupling member (8) comprises a bearing eye (23) receiving the crankpin (13) of the crankshaft (14), and wherein a centre point (26) of the coupling member (8) is arranged outside the bearing eye (23), wherein the centre point (26) is arranged on a side of a first plane (24) which faces the piston (4) of the internal combustion engine (1), said first plane receiving the coupling member rotation axis (12) and the connecting rod rotation axis (17), **characterised in that** a coupling angle (α) between an imagined straight line through the coupling member rotation axis (12) and the connecting rod rotation axis (17) on the one hand and an imagined straight line through the coupling member rotation axis (12) and the piston rod rotation axis (9) on the other hand is at least 140° and at most 180°.

2. Multi-joint crank drive according to claim 1, **characterised in that** the centre point (26) is arranged on the same side of a second plane (25) as the connecting rod rotation axis (17), said second plane being perpendicular to the first plane (24) and receiving the coupling member rotation axis (12).

3. Multi-joint crank drive according to any of the preceding claims, **characterised in that** the ratio between the distance (a) of the centre point (26) of the coupling member rotation axis (12) and a radius (r) of the bearing eye (23) is at least 110%, at least 120%, at least 130%, at least 140% or at least 150%.

4. Multi-joint crank drive according to any of the preceding claims, **characterised in that** an additional mass (27) is fastened on the coupling member (8).

5. Multi-joint crank drive according to claim 4, **characterised in that** the additional mass (27) is made of a material with a greater density than the coupling member (8).

6. Multi-joint crank drive according to claim 4 or 5, **characterised in that** the additional mass (27) is fastened on a cantilever (28) of the coupling member (8) and/or traverses the cantilever (28).

7. Multi-joint crank drive according to any of the preceding claims, **characterised in that** the bearing eye (23) is formed by a base body (29) of the coupling member (8) and a bearing cover (30), wherein the bearing cover (30) is made of a material with a lower density than the base body (29).

8. Multi-joint crank drive according to claim 7, **characterised in that** the bearing cover (30) is predominantly arranged on a side of the first plane (24) which faces away from the piston (4).

9. Internal combustion engine (1), **characterised by** a multi-joint crank drive (2) according to one or more of the preceding claims.

## Revendications

1. Mécanisme bielle-manivelle à plusieurs articulations (2) d'un moteur à combustion interne (1) avec au moins un organe de couplage (8) logé de manière rotative autour d'un axe de rotation d'organe de couplage (12) sur un maneton (13) d'un vilebrequin (14) et au moins une biellette articulée (16) logée de manière rotative autour d'un axe de rotation d'excentrique (18) sur un maneton (19) d'un arbre d'excentrique (20), dans lequel l'organe de couplage (8) est relié de manière pivotante autour d'un axe de rotation de biellette de piston (9) à une biellette de piston (6) d'un piston (4) du moteur à combustion interne (1) et de manière pivotante autour d'un axe de rotation de biellette articulée (17) à la biellette articulée (16), dans lequel l'organe de couplage (8) présente un oeillet de palier (23) recevant le maneton (13) du vilebrequin (14), et dans lequel un centre de gravité (26) de l'organe de couplage (8) est agencé en dehors de l'oeillet de palier (23), dans lequel le centre de gravité (26) est agencé sur un côté, tourné vers le piston (4) du moteur à combustion interne (1), d'un premier plan (24) recevant l'axe de rotation d'organe de couplage (12) ainsi que l'axe de rotation de biellette articulée (17), **caractérisé en ce qu'**un angle de couplage (α) entre une droite imaginaire passant par l'axe de rotation d'organe de couplage (12) ainsi que l'axe de rotation de biellette articulée (17) d'une part et une droite imaginaire passant par l'axe de rotation d'organe de couplage (12) ainsi que l'axe de rotation de biellette de piston (9) d'autre part s'élève au moins à 140° et au plus à 180°.

2. Mécanisme bielle-manivelle à plusieurs articulations selon la revendication 1, **caractérisé en ce que** le centre de gravité (26) est agencé sur le même côté d'un second plan (25) se trouvant perpendiculaire au premier plan (24) et recevant l'axe de rotation d'organe de couplage (12) que l'axe de rotation de biellette articulée (17).

3. Mécanisme bielle-manivelle à plusieurs articulations selon l'une quelconque des revendications précédentes, **caractérisé en ce que** le rapport de la distance (a) du centre de gravité (26) de l'axe de rotation d'organe de couplage (12) et d'un rayon (r) de l'oeillet de palier (23) s'élève au moins à 110 %, au moins à 120 %, au moins à 130 %, au moins à 140 % ou au moins à 150 %.

4. Mécanisme bielle-manivelle à plusieurs articulations selon l'une quelconque des revendications précédentes, **caractérisé en ce qu'**une masse supplémentaire (27) est fixée à l'organe de couplage (8).

5. Mécanisme bielle-manivelle à plusieurs articulations selon la revendication 4, **caractérisé en ce que** la masse supplémentaire (27) est constituée d'un matériau avec une densité supérieure à celle de l'organe de couplage (8).

6. Mécanisme bielle-manivelle à plusieurs articulations selon la revendication 4 ou 5, **caractérisé en ce que** la masse supplémentaire (27) est fixée à une flèche (28) de l'organe de couplage (8) et/ou traverse la flèche (28).

7. Mécanisme bielle-manivelle à plusieurs articulations selon l'une quelconque des revendications précédentes, **caractérisé en ce que** l'oeillet de palier (23) est réalisé par un corps de base (29) de l'organe de couplage (8) et un couvercle de palier (30), dans lequel le couvercle de palier (30) est constitué d'un matériau avec une densité plus faible que celle du corps de base (29).

8. Mécanisme bielle-manivelle à plusieurs articulations selon la revendication 7, **caractérisé en ce que** le couvercle de palier (30) est agencé principalement sur le côté, opposé au piston (4), du premier plan (24).

9. Moteur à combustion interne (1), **caractérisé par** un mécanisme bielle-manivelle à plusieurs articulations (2) selon l'une quelconque ou plusieurs des revendications précédentes.
